# EUROPÄISCHE PATENTSCHRIFT

(11) **EP 2 906 849 B1**
(45) Veröffentlichungstag und Bekanntmachung des Hinweises auf die Patenterteilung: **09.11.2016**
(21) Anmeldenummer: 13732936.3
(22) Anmeldetag: 01.07.2013
(51) Int. Cl.: F16F 1/373

(54) **BASISELEMENT**
BASE ELEMENT
ÉLÉMENT DE BASE

(30) Priorität: 31.07.2012 DE 102012213442
(43) Veröffentlichungstag der Anmeldung: 19.08.2015
(73) Patentinhaber: BOGE Elastmetall GmbH, 49401 Damme (DE)
(72) Erfinder: SCHARF, Jörg, 65558 Eppenrod (DE); NEUSS, Bernhard, 53343 Wachtberg (DE)
(74) Vertreter: Bossmeyer, Jörg Peter
(86) Internationale Anmeldenummer: PCT/EP2013/063799
(87) Internationale Veröffentlichungsnummer: WO 2014/019785

(56) Entgegenhaltungen:
- EP-A1- 1 595 676
- US-A1- 2012 001 373

## Beschreibung

Die vorliegende Erfindung betrifft ein Basiselement zur Befestigung eines Bauteils mit Befestigungslöchern, welche in einem metallischen Basiskörper ausgespart sind, der mit einer Elastomerschicht beschichtet ist. Solche Basiselemente werden üblicherweise als Blechteil ausgebildet und dienen der Befestigung eines Bauteils. Das Bauteil kann insbesondere ein Dämpfungselement sein, welches zwei Anschlussbereiche definiert, die miteinander über das Elastomer verbunden sind. Solche Dämpfungselemente sind als Elastomer-Dämpfungselemente bzw. Hydrolager allgemein bekannt. Da bei solchen Dämpfungselementen das Elastomer zur dämpfenden Übertragung von Kräften zwischen den Anschlussbereichen genutzt wird, wird üblicherweise Elastomer auch über die metallischen Teile, einschließlich des Basiselementes gezogen, um hiermit einen Korrosionsschutz zu bewirken. Eine als Korrosionsschicht wirkende gesonderte Lackierung ist dementsprechend überflüssig (vgl. auch DE 101 42 210 C1 bzw. DE 10 2008 021 207 A1).

Dokument US2012/0001373 offenbart auch ein Basiselement zur Befestigung eines Bauteils.

Bei üblichen Basiselementen sind die Befestigungslöcher in einem Lochmuster vorgesehen, welches durch die Einbausituation bedingt ist. Die Befestigungslöcher sind dementsprechend relativ zueinander so positioniert, dass diese in der Einbausituation des Basiselementes an der gewünschten Befestigungsposition angeordnet werden. Im Aufbau identische Bauteile werden mitunter an verschiedenen Einbaupositionen und dabei in verschiedenen Einbausituationen eingebaut. In diesem Fall kann es notwendig sein, Befestigungslöcher in anderer Anordnung vorzusehen, um das Basiselement zusammen mit dem Bauteil zu befestigen. Es besteht zwar die Möglichkeit, für etwaige Varianten eine Mehrzahl von Befestigungslöchern vorzusehen, von denen lediglich eine Auswahl von Befestigungslöchern in einer bestimmten Einbausituation zum Einsatz kommt. Eine Vielzahl von an dem Basiselement vorgesehenen Befestigungslöchern erhöht indes das Risiko einer fehlerhaften Montage. Auch wird die Montage wegen der Notwendigkeit, das richtige Befestigungsloch jeweils auszuwählen, verkompliziert und verlängert.

Der vorliegenden Erfindung liegt die Aufgabe zugrunde, ein Basiselement der eingangs genannten Art zu schaffen, welches auf kostengünstige Weise vor Korrosion geschützt ist und mehr als eine Anschraubvariante unter Vermeidung der oben beschriebenen Probleme ermöglicht.

Zur Lösung dieser Aufgabe wird mit der vorliegenden Erfindung ein Basiselement mit den Merkmalen von Anspruch 1 vorgeschlagen. Dieses ist dadurch gekennzeichnet, dass die Befestigungslöcher wenigstens zwei Lochmuster ausbilden und das wenigstens eines der Lochmuster durch das Ausbilden des Elastomers auf dem Basiskörper unbrauchbar ist.

Das erfindungsgemäße Basiselement weist wenigstens zwei unterschiedliche Lochmuster auf, d.h. kann in zwei unterschiedlichen Einbausituationen montiert werden. Die Einbausituation ist dabei durch korrespondierend zu den Befestigungslöchern ausgeformten Befestigungsaugen oder -bolzen gegeben. Das Basiselement hat wenigstens zwei Lochmuster, wobei jedes einzelne Lochmuster für eine bestimmte Einbausituation angepasst ausgebildet ist. Dies schließt die Möglichkeit ein, dass zwei unterschiedliche Lochmuster sich ein oder mehrere Befestigungslöcher teilen. So können bereits zwei unterschiedliche Lochmuster durch insgesamt drei Befestigungslöcher an dem Basiselement gebildet sein. Das Basiselement ist insbesondere ein Blechteil, welches durch Stanzen und Biegen ausgeformt ist und einen Befestigungsflansch ausbildet, der ein einteilig oder mehrteilig daran angeformtes Bauteil trägt, beispielsweise ein Innenteil oder ein Außenteil eines Elastomerlagers. Dabei durchsetzen sich das Innenteil und das Außenteil regelmäßig und sind unter Zwischenlage des Elastomers, der dort einen dämpfenden Elastomerkörper ausbildet, miteinander verbunden.

Bei dem erfindungsgemäßen Basiselement wirkt das Elastomer darüber hinaus als Korrosionsschutz, d.h. beschichtet den metallischen Basiskörper üblicherweise nahezu vollständig. Üblicherweise wird indes zumindest eine Anlagefläche für das Basiselement freigelassen, d.h. nicht mit dem Elastomermaterial überzogen, um eine exakte Anlagefläche zur Befestigung des Basiselementes zu erhalten. Dabei reicht bereits eine sehr dünne Beschichtung aus. Es kommt vor allem auf die vollständige Einsiegelung der metallischen Oberfläche des Basiskörpers durch den elastomeren Werkstoff an. Darüber hinaus ist der elastomere Werkstoff aber auch so ausgebildet, dass das bzw. die Befestigungslöcher wenigstens eines der Lochmuster durch die Ausbildung des Elastomers unbrauchbar ist. Unbrauchbar in diesem Sinne bedeutet, dass bereits bei einer Sichtprüfung für den Monteur erkennbar ist, dass die durch den Elastomer unbrauchbar gemachten Befestigungslöcher eines Lochmusters nicht für die Befestigung in Frage kommen. Dies bedeutet nicht, dass diese Löcher zwingend für eine Befestigung unbrauchbar sind. So reicht es bereits aus, durch den elastomeren Werkstoff einen sich üblicherweise von der innenumfänglichen Beschichtung des metallischen Basiskörpers nach innen abragenden Indikator vorzusehen, der anzeigt, dass eben jenes Befestigungsloch für die Montage der entsprechenden Variante nicht auszuwählen ist.

So kann gemäß einer bevorzugten Weiterbildung die Innenfläche eines Befestigungsloches des unbrauchbaren Lochmusters zumindest teilweise durch den Elastomer verlegt sein. Bei dieser Fallgestaltung wird davon ausgegangen, dass das Befestigungsloch des unbrauchbaren Lochmusters wie auch die brauchbaren Befestigungslöcher innenseitig mit dem elastomeren Material beschichtet sind. Von dem Befestigungsloch des unbrauchbaren Lochmusters ragt indes von dieser Beschichtung radial nach innen Elastomermaterial herein und kennzeichnet das entsprechende Befestigungsloch als unbrauchbares Befestigungsloch.

Gemäß einer alternativen Ausgestaltung ist das Befestigungsloch eines unbrauchbaren Lochmusters vollständig von dem Elastomer überdeckt. So ist es nicht möglich, ohne Zerstörung des elastomeren Materials ein Befestigungselement, beispielsweise einen Bolzen oder eine Schraube in das Befestigungsloch des unbrauchbaren Lochmusters einzubringen.

Nach einer Weiterbildung der vorliegenden Erfindung ist das Befestigungsloch des unbrauchbaren Lochmusters mit einem Stopfen verschlossen. Dieser Stopfen ist zumindest einseitig mit dem Elastomer überzogen und dementsprechend gesichert. Der Stopfen kann konisch ausgebildet sein, so dass ein Herausfallen zu der gegenüberliegenden Seite auch dann verhindert wird, wenn dort kein elastomeres Material vorgesehen ist. Üblicherweise wird indes der Stopfen an beiden Eintrittsöffnungen zu dem Befestigungsloch mit elastomerem Material überdeckt. Das Material des Stopfens muss dabei nicht zwingend ein hochwertiges, korrosionsbeständiges Material sein. Vielmehr sollte das Material unter Kostengesichtspunkten ausgewählt werden. So können Stopfen aus Holzspänen oder geschäumten Kunststoffen zum Einsatz kommen. Der Stopfen dient dabei als Platzhalter und spart Elastomermaterial, welches andernfalls das Befestigungsloch vollständig ausfüllen müsste.

Gemäß einer alternativen Ausgestaltung der vorliegenden Erfindung ist in das Befestigungsloch des unbrauchbaren Lochmusters ein Verschlusselement eingebracht, welches mit dem Elastomer durch Vulkanisation verbunden ist. Bei dieser Fallgestaltung kann das Verschlusselement beispielsweise bereits vor dem Überziehen des Basisteils mit dem elastomeren Material in das Befestigungsloch des unbrauchbaren Lochmusters eingebracht und danach mit dem elastomeren Material überzogen und schließlich durch Vulkanisation damit verbunden werden, so dass ein Herausfallen des Verschlusselementes wirksam verhindert ist.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische, teilweise geschnittene Ansicht eines Dämpfungselementes;
- Figur 2: eine Draufsicht auf ein gegenüber dem in Figur 1 gezeigten Ausführungsbeispiel abgewandeltes Ausführungsbeispiel; und
- Figur 3: das in den Figuren 1 und 2 gezeigte Ausführungsbeispiel für eine alternative Befestigungssituation.

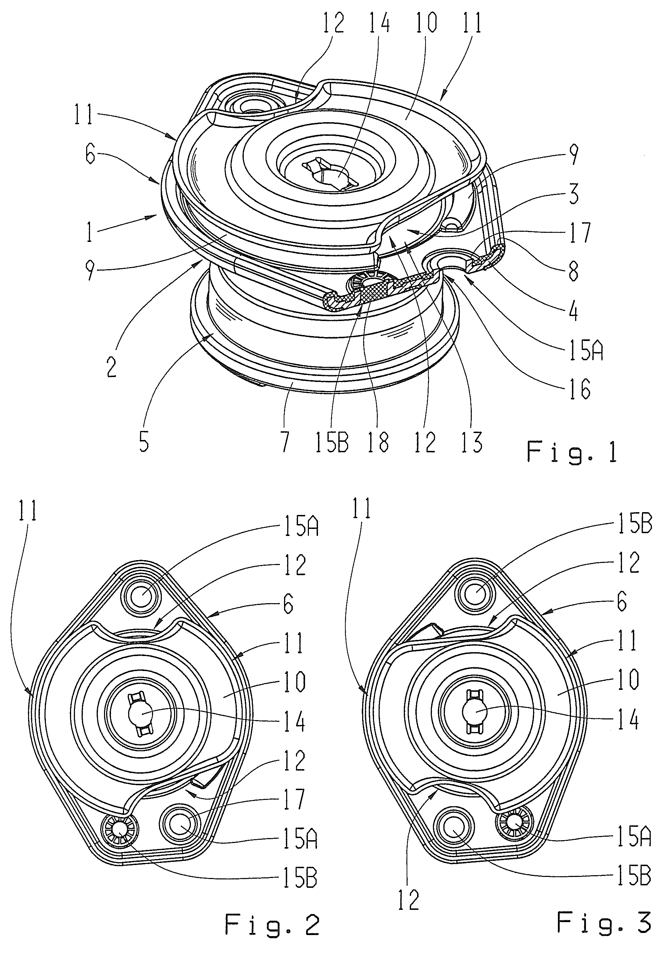

Die Figur 1 zeigt ein Dämpfungselement 1 mit einem Außenteil 2 und einem Innenteil 3. Das Außenteil 2, welches auch als Basiselement bezeichnet werden kann, ist als Blechteil mittels Stanzen und Biegen ausgebildet und hat einen metallischen Blechkern 4, der einen mittleren Zylinderabschnitt 5, einen Befestigungsflansch 6 und einen Gegenflansch 7 anteilig ausformt. Der Blechkern 4 ist von einer Elastomerschicht 8 vollständig überzogen, die aus einem Elastomer gebildet ist, der das Innenteil 3 mit dem Außenteil 2 verbindet, und zwar über einen nicht dargestellten Elastomerkörper, der von dem Zylinderabschnitt 5 umfänglich umgeben ist. Das Elastomer bildet an dem Befestigungsflansch 6 überragende Dämpfungsrippen 9 aus, die sich an einem zu dem Zylinderabschnitt 5 führenden Innenrand des Befestigungsflansches 6 befinden.

Die Dämpfungsrippen 9 begrenzen die Schwenkbewegung des Innenteils 3, welches gegenüberliegend zu den Dämpfungsrippen 9 einen Anschlagteller 10 ausformt. Der Anschlagteller 10 hat zwei konvex geformte Außenkonturabschnitte 11 sowie zwei im Wesentlichen gegenüberliegende konkave Außenkonturabschnitte 12. Unter diesen Außenkonturabschnitten 12 lassen die Dämpfungsrippen 9 einen Freiraum 13 frei.

Das Innenteil 3 hat eine Befestigungsbohrung 14. Der Befestigungsflansch 6 hat zwei einander gegenüberliegende durchgängige Befestigungslöcher 15, die - wie Figur 2 belegt - mit den konkaven Außenkonturabschnitten 12 des Anschlagtellers 10 im Wesentlichen fluchten, d.h. in der Draufsicht gemäß Figur 2 freiliegen. Die Befestigungslöcher 15 sind durch Stanzen und Biegen des Blechkerns 4 ausgeformt, wie insbesondere der geschnittene Teil von Figur 1 belegt. Die Befestigungslöcher 15 haben dementsprechend einen zu der Befestigungsseite hin vorragenden Zylinderabschnitt 16, dessen freie Stirnfläche als Ringfläche 17 eine Befestigungsebene definiert. Die Ringfläche 17 ist frei von elastomerem Material.

Die beiden in Figur 2 in den Außenkonturabschnitten 12 freiliegenden Befestigungslöcher 15 bilden ein erstes Lochmuster A aus und sind dementsprechend als Befestigungslöcher 15A gekennzeichnet.

Zur Befestigung des in den Figuren 1 und 2 gezeigten Ausführungsbeispiels wird der Befestigungsflansch 6 über die Ringflächen 17 der beiden Befestigungslöcher 15A an Gegenflächen angelegt. Schrauben oder Bolzen durchsetzen die Befestigungslöcher 15. Das Außenteil 2 wird dementsprechend mit einem ersten Element eines Schwingungssystems, beispielsweise einem Chassis verbunden. Über die Befestigungsbohrung 14 erfolgt die Befestigung mit einem anderen Element eines Schwingungssystems, so dass die beiden Elemente über das Dämpfungselement 1 miteinander verbunden sind. Bei einer Dämpfung ergibt sich eine Relativbewegung der beiden Teile 2, 3 gegeneinander. Es kann sich eine Taumelbewegung ergeben, in deren Rahmen der Anschlagteller 10 gegen die Dämpfungsrippen 9 anschlägt. Aufgrund der konkaven Außenkonturabschnitte 12 wird verhindert, dass ein Anschlagen unmittelbar gegen die Befestigungsflansche erfolgt, welche der Befestigung des Außenteiles 2 über die Befestigungslöcher 15 dient.

Die Figur 3 verdeutlicht das in den Figuren 1 und 2 gezeigte Ausführungsbeispiel für eine alternative Einbausituation. Für diese Einbausituation ist das Innenteil 3 um die durch die Befestigungsbohrung 14 definierte Achse im Wesentlichen um 180° verschwenkt, so dass das in den Figuren 2 und 3 oben dargestellte Befestigungsloch 15 weiterhin freigelegt ist, wohingegen von den in den Figuren 2 und 3 unten nebeneinander dargestellten Befestigungslöchern 15 das in Figur 2 freiliegende Befestigungsloch 15A teilweise durch einen der konvex geformten Außenkonturabschnitte 11 verlegt ist und das benachbart hierzu vorgesehene Befestigungsloch 15B durch einen der konkaven Außenkonturabschnitte 12 des Anschlagtellers 10 freigelegt ist. So ist in Figur 3 ein weiteres Lochmuster B gezeigt und die dieses Lochmuster ausbildenden Befestigungslöcher dementsprechend mit Bezugszeichen B gekennzeichnet. Das weitere Lochmuster B dient der Befestigung des Außenteils 2 an einem alternativ ausgeformten Element des Schwingungssystems.

Wie Figur 1 verdeutlicht, ist das mit Bezugszeichen 15B gekennzeichnete Befestigungsloch unbrauchbar gemacht. Hierzu ist ein Kunststoffstopfen 18 in das Befestigungsloch 15B eingebracht. Das Befestigungsloch 15B ist ansonsten vollständig ausgebildet, d.h. weist den Zylinderabschnitt 16 auf. Das Befestigungsloch ist allerdings auch auf der Befestigungsseite mit dem elastomeren Material überzogen und dementsprechend dort gegen Korrosion geschützt. Das Elastomer versiegelt dementsprechend den Kunststoffstopfen 18 und hält diesen in dem Befestigungsloch 15B fest.

Statt eines Kunststoffstopfens 18 kann das Befestigungsloch 15B alternativ auch vollständig durch das elastomere Material verschlossen sein. Ebenso kann das Befestigungsloch 15B auch lediglich teilweise verlegt bzw. verschlossen sein.

Wie das Ausführungsbeispiel verdeutlicht, sind die das Dämpfungselement 1 ausbildenden Teile identisch ausgebildet. Dabei bildet das Außenteil 2 ein Basiselement im Sinne der vorliegenden Erfindung als Beispiel aus. Dieses Außenteil 2 hat drei Befestigungslöcher 15, von denen jeweils zwei ein Lochmuster A bzw. B ausformen. Jeweils zwei dieser Befestigungslöcher 15 sind für die jeweilige Einbausituation auch als solche nutzbar. Das andere Befestigungsloch 15A bzw. 15B ist unbrauchbar, und zwar durch entsprechende Ausgestaltung des elastomeren Materials. Dieses elastomere Material hält bei dem Ausführungsbeispiel nach Figur 1 den Kunststoffstopfen 18. Bei der Alternative gemäße Figur 2 wird die Innenumfangsfläche des Befestigungsloches 15 durch das elastomere Material teilweise verlegt bzw. verschlossen, so dass kenntlich gemacht ist, dass eben jenes Befestigungsloch 15B nicht für Montagezwecke auszuwählen ist, auch wenn gegebenenfalls eine Befestigungsschraube, die ansonsten durch die Befestigungslöcher 15A durchsteckbar ist, durch das entsprechende Befestigungsloch 15B passen würde.

Bei dem Ausführungsbeispiel nach Figur 3 ist das Befestigungsloch 15A des ersten Lochmusters A benachbart zu dem Befestigungsloch 15B verlegt und daher unbrauchbar gemacht. Bei diesem Ausführungsbeispiel erstreckt sich das elastomere Material durch das gesamte Befestigungsloch 15A.

Abgesehen von den Ringflächen 17 der zur Befestigung vorgesehenen Befestigungslöcher 15 ist das Außenteil 2 vollständig mit elastomerem Material als Korrosionsschutz überzogen. Das elastomere Material bildet darüber hinaus Funktionsflächen und -elemente des Dämpfungselementes 1 aus, so dass dieses elastomere Material kombinatorisch sowohl den Korrosionsschutz bietet, als auch für die Dämpfung innerhalb des Dämpfungselementes 1 eingesetzt ist, d.h. die Relativbewegung zwischen den beiden Teilen 2, 3 dämpfend ermöglicht und jedenfalls über die Dämpfungsrippen 9 als Anschläge begrenzt.

### Bezugszeichen

- 1: Dämpfungselement
- 2: Außenteil/Basiselement
- 3: Innenteil
- 4: Blechkern
- 5: Zylinderabschnitt
- 6: Befestigungsflansch
- 7: Gegenflansch
- 8: Elastomerschicht
- 9: Dämpfungsrippe
- 10: Anschlagteller
- 11: konvexer Außenkonturabschnitt
- 12: konkaver Außenkonturabschnitt
- 13: Freiraum
- 14: Befestigungsbohrung
- 15: Befestigungsloch
- 16: Zylinderabschnitt
- 17: Ringfläche
- 18: Kunststoffstopfen

## Patentansprüche

1. Basiselement (2) zur Befestigung eines Bauteils mit Befestigungslöchern (15), welche in einem metallischen Basiskörper (4) ausgespart sind, der mit einem Elastomer (8) beschichtet ist,
**dadurch gekennzeichnet, dass** die Befestigungslöcher (15) wenigstens zwei Lochmuster (A; B) ausbilden und dass wenigstens eines der Lochmuster (15A; 15B) durch das Ausbilden des Elastomers auf dem Basisköper (4) unbrauchbar ist.

2. Basiselement (2) nach Anspruch 1, **dadurch gekennzeichnet, dass** ein Befestigungsloch (15B) des unbrauchbaren Lochmusters (B) zumindest teilweise durch den Elastomer verlegt ist.

3. Basiselement (2) nach Anspruch 1, **dadurch gekennzeichnet, dass** ein Befestigungsloch (15A, 15B) des unbrauchbaren Lochmusters (A; B) vollständig von dem Elastomer überdeckt ist.

4. Basiselement (2) nach einem der vorherigen Ansprüche, **dadurch gekennzeichnet, dass** das Befestigungsloch (15B) des unbrauchbaren Lochmusters (B) mit einem Stopfen (18) verschlossen ist, der zumindest einseitig mit dem Elastomer überzogen ist.

5. Basiselement (2) nach einem der vorherigen Ansprüche, **dadurch gekennzeichnet, dass** in das Befestigungsloch (15B) des unbrauchbaren Lochmusters (B) ein Verschlusselement (18) eingebracht ist, welches mit dem Elastomer durch Vulkanisation verbunden ist.

## Claims

1. Base element (2) for securing a building element with mounting holes (15) which are recessed in a metallic base body (4) which is coated with an elastomer (8),
**characterised in that** the mounting holes (15) form at least two hole patterns (A; B) and at least one of the hole patterns (15A; 15B) is unusable because of the formation of the elastomer on the base body (4).

2. Base element (2) according to Claim 1, **characterised in that** a mounting hole (15B) in the hole pattern (B) is at least partially blocked by the elastomer.

3. Base element (2) according to Claim 1, **characterised in that** a mounting hole (15A, 15B) in the unusable hole pattern (A; B) is completely covered by the elastomer.

4. Base element (2) according to any one of the preceding claims, **characterised in that** the mounting hole (15B) in the unusable hole pattern (B) is sealed with a plug (18) which is coated with elastomer at least on one side.

5. Base element (2) according to any one of the preceding claims, **characterised in that** a closure element (18) is integrated into the mounting hole (15B) in the unusable hole pattern (B) which is connected with the elastomer through vulcanisation.

## Revendications

1. Elément de base (2) pour fixer un composant muni de trous de fixation (15) ménagés dans un corps de base (4) métallique recouvert d'un élastomère (8), **caractérisé en ce que** les trous de fixation (15) réalisent au moins deux motifs de trous (A ; B) et **en ce qu'**au moins l'un des motifs de trous (15A ; 15B) est rendu inutilisable par la réalisation de l'élastomère sur le corps de base (4).

2. Elément de base (2) selon la revendication 1, **caractérisé en ce qu'**un trou de fixation (15B) du motif de trous (B) inutilisable est au moins partiellement décalé par l'élastomère.

3. Elément de base (2) selon la revendication 1, **caractérisé en ce qu'**un trou de fixation (15A, 15B) du motif de trous (A; B) inutilisable est complètement recouvert par l'élastomère.

4. Elément de base (2) selon l'une quelconque des revendications précédentes, **caractérisé en ce que** le trou de fixation (15B) du motif de trous (B) inutilisable est fermé par un bouchon (18) qui est recouvert par l'élastomère au moins sur une face.

5. Elément de base (2) selon l'une quelconque des revendications précédentes, **caractérisé en ce que** dans le trou de fixation (15B) du motif de trous (B) inutilisable, un élément de fermeture (18) est introduit qui est relié à l'élastomère par vulcanisation.
